(19) Europäisches Patentamt

European Patent Office

Office européen des brevets

(11) **EP 4 117 910 B1**

(12) **FASCICULE DE BREVET EUROPEEN**

(45) Date de publication et mention
de la délivrance du brevet:
**25.02.2026 Bulletin 2026/09**

(21) Numéro de dépôt: **21710014.8**

(22) Date de dépôt: **11.03.2021**

(51) Classification Internationale des Brevets (IPC):
**B32B 7/02** *(2019.01)* **B32B 17/10** *(2006.01)*

(52) Classification Coopérative des Brevets (CPC):
**B32B 17/10036; B32B 7/02; B32B 17/10091;
B32B 17/10119; B32B 17/10761;** B32B 2307/402;
B32B 2307/732

(86) Numéro de dépôt international:
**PCT/EP2021/056129**

(87) Numéro de publication internationale:
**WO 2021/180828 (16.09.2021 Gazette 2021/37)**

(54) **VITRAGE FEUILLETE ASYMETRIQUE**

ASYMMETRISCHE VERBUNDGLASSCHEIBE

ASYMMETRICAL LAMINATED GLAZING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.03.2020 FR 2002440**

(43) Date de publication de la demande:
**18.01.2023 Bulletin 2023/03**

(73) Titulaire: **Saint-Gobain Sekurit France
60150 Thourotte (FR)**

(72) Inventeurs:
• **MERCIER, Gérald
60200 COMPIEGNE (FR)**
• **BOURE, Jean-Philippe
60170 RIBECOURT (FR)**
• **DE FREITAS, Simon
75017 PARIS (FR)**
• **RAPENNE, Thibault
60400 NOYON (FR)**

(74) Mandataire: **Saint-Gobain Recherche
41 Quai Lucien Lefranc
93300 Aubervilliers (FR)**

(56) Documents cités:
WO-A1-2018/015702     WO-A1-2020/020937
FR-A1- 3 012 073     US-A1- 2012 055 094

**Description**

DOMAINE TECHNIQUE

L'invention concerne le domaine des vitrages feuilletés pour véhicule, notamment automobile, notamment les vitrages latéraux, c'est-à-dire les vitrages équipant les portières de véhicule automobile pouvant être montés ou baissés dans la portière.

ARRIERE PLAN TECHNIQUE

Traditionnellement, les vitrages latéraux automobile sont monolithiques et trempés. Afin d'améliorer la résistance aux effractions, ces vitrages latéraux peuvent avantageusement être feuilletés. Afin de leur conserver une bonne résistance aux chocs extérieurs (notamment en cas d'effraction et éventuellement au gravillonnage) ou intérieurs (les vitres latérales feuilletées permettent de maintenir les occupants à l'intérieur de l'habitacle en cas d'accident et de retournement du véhicule ; elles préviennent ainsi des blessures irrémédiables lorsqu'un occupant est partiellement éjecté du véhicule), les feuilles de verre composant le vitrage feuilleté sont durcies (« toughened » en anglais), c'est-à-dire trempées ou semi-trempées. Il a déjà été proposé de réaliser un vitrage feuilleté en assemblant une feuille de verre très mince, d'épaisseur inférieure à 1 mm, le cas échéant bombée à froid (« cold forming »), avec une feuille de verre épaisse. Cependant, la très fine épaisseur de la feuille mince nécessite, comme traitement de durcissement, le recours à une trempe chimique qui est une technique onéreuse. On cherche par ailleurs à réaliser des vitres les plus légères possibles, au poids et à l'épaisseur n'excédant pas celle de vitres monolithiques standards. Par ailleurs, ces vitrages latéraux feuilletés étant plus particulièrement destinés à équiper les véhicules de haut standing, on attend d'eux des qualités d'isolation acoustique, et la faculté de pouvoir être montés sur des portières « frameless », c'est-à-dire sans cadre supérieur, également dites « sans cadre ». Dans ce cas, le vitrage doit être suffisamment rigide afin que son bord supérieur rentre sans faute dans la rainure prévue à cet effet dans la carrosserie de la partie supérieure de l'ouverture de la porte, lorsqu'on remonte la vitre. En effet, on s'est aperçu que lorsque le véhicule se déplace à grande vitesse, il pouvait être difficile de remonter complètement une vitre insuffisamment rigide, à cause d'un différentiel de pression entre l'intérieur et l'extérieur du véhicule provoquant une déformation sensible de cette vitre.

WO 2020/020937 A1 divulgue un vitrage feuilleté pour véhicule comprenant une première feuille de verre minéral silico-sodocalcique d'une épaisseur e1 comprise entre 1,5 mm et 2,5mm, une deuxième feuille de verre minéral et un intercalaire de feuilletage, la première et la deuxième feuilles de verre minéral étant liées entre elles adhésivement par l'intermédiaire de intercalaire de feuilletage, ledit vitrage feuilleté étant caractérisé en ce que la deuxième feuille de verre minéral est une feuille de verre minéral silico- sodocalcique ayant une épaisseur e2 comprise entre 0,4 et 1,1 mm; ladite deuxième feuille de verre minéral silico-sodocalcique est trempée chimiquement; et la contrainte de compression en surface de ladite deuxième feuille de verre minéral silico-sodocalcique est comprise entre 350MPa et 550MPa. L'intercalaire de feuilletage est préférentiellement réalisée en PVB, avec une épaisseur dans l'intervalle 0.05 à 4 mm.

RESUME DE L'INVENTION

L'invention remédie aux problèmes susmentionnés et permet l'obtention à coût raisonnable d'un vitrage feuilleté présentant un compromis exceptionnel de propriétés. L'invention part de la volonté d'utiliser des feuilles de verre suffisamment épaisses pour pouvoir être renforcées thermiquement sans devoir utiliser une trempe chimique. Pour ce faire et dans l'état actuel de la technique, on estime que ces feuilles doivent avoir une épaisseur d'au moins 1 mm.

A épaisseur égale de verre, un vitrage feuilleté présente un module de rigidité en flexion inférieur à celui d'un vitrage monolithique. En effet, selon la théorie de la mécanique des plaques, le module de rigidité en flexion R (traduisant la capacité à résister à des efforts de flexion imposés) d'une feuille de verre est proportionnelle à son épaisseur T au cube, selon la formule :

$$R = K(E, \mu) \cdot T^3$$

dans laquelle K est un coefficient de proportionnalité dépendant du module élastique E du matériau et de son coefficient de poisson $\mu$. C'est pourquoi, lorsque l'on compare la rigidité en flexion $R_m$ d'un verre monolithique et d'épaisseur comprise entre 2,85 et 4,85 mm et celle $R_f$ d'un feuilleté de deux verres dont les épaisseurs individuelles sont comprises entre 1,6 mm et 2,6 mm, on constate que la rigidité du verre monolithique est bien supérieure :

$$R_m = K \cdot (2,85 \text{ à } 4,85)^3 \quad >> \quad R_f = K \cdot [(1,6 \text{ à } 2,6)^3 + (1,6 \text{ à } 2,6)^3]$$

Il est à noter que dans la formule de Rf ci-dessus, on a éliminé la contribution de l'intercalaire thermoplastique qui, pour des températures supérieures à -10°C, est toujours très nettement négligeable.

Selon l'invention, on réalise un vitrage asymétrique, ce qui signifie qu'il comprend deux feuilles de verre d'épaisseurs différentes, une feuille de verre V1 d'épaisseur E1, et une feuille de verre V2 d'épaisseur E2, E1 étant supérieure à E2, V1 étant appelé verre épais et V2 étant appelé verre mince. Généralement, le verre mince est placé du côté de l'intérieur du véhicule et peut être appelé « verre intérieur ». Sa face externe, tournée vers l'intérieur du véhicule, est généralement concave dans une direction verticale. Généralement, le verre épais est placé du côté de l'extérieur du véhicule et peut être appelé « verre extérieur ». Sa face externe, tournée vers l'extérieur du véhicule, est généralement convexe dans une direction verticale.

Selon l'invention, le rapport d'asymétrie est modéré et tel que $0,34 \leq E2/E1 \leq 0,9$ et le verre mince est d'épaisseur d'au moins 1,1 mm. En effet, on évite d'utiliser des feuilles de verre très minces compte tenu des constats négatifs suivants :

- les feuilles de verre très minces (i.e. inférieure à 1 mm, typiquement 0,7 ou 0,55 mm) sont extrêmement fragiles et donnent lieu à de nombreuses casses à de nombreuses étapes du procédé : découpe, façonnage, lavage avant ou après formage, éventuelle trempe chimique, assemblage, mise en palettes, etc. ;
- le bombage à froid, possible avec les feuilles très minces (i.e. inférieure à 1 mm, typiquement 0,7 ou 0,55 mm), s'est avéré décevant pour deux raisons : 1) une limitation de la complexité géométrique atteignable par cette technique car affectant la qualité optique des bords ou l'assemblabilité des deux feuilles de verre - car la feuille de verre intérieure très mince a tendance à former des plis à la périphérie du vitrage, et 2) il est nécessaire de renforcer les propriétés mécaniques de la feuille de verre intérieure par trempe chimique ;
- l'opération de trempe chimique, nécessaire pour renforcer les feuilles très minces, s'est révélée très peu adaptée à la production de produits pour l'automobile : 1) cette opération est trop longue car elle nécessite de maintenir la feuille de verre à haute température et pendant plusieurs heures dans différents bains de sels alcalin afin d'obtenir les bons niveaux de contraintes de surface, 2) elle donne lieu à des rendements très médiocre avec de nombreuses casses lors des manipulations, du lavage avant ou après trempe chimique et lors de l'opération de trempe elle-même, 3) le travail par lots, par nature discontinu et nécessitant des stocks intermédiaires, est très perturbant dans les ateliers de production.

C'est pourquoi, l'invention a été conçue sur la base des principes suivants :

1) utiliser des feuilles de verre d'épaisseur égale ou supérieure à 1,1 mm,
2) former les deux feuilles de verre sur des procédés de bombage thermique (et non pas « à froid ») et de feuilletage classiques et
3) utiliser un renforcement thermique (et non pas chimique) par refroidissement rapide à l'air pour semi-tremper ou éventuellement tremper chaque feuille de verre ;
4) prendre en compte l'épaisseur de l'intercalaire en matériau polymère ; en effet, on s'est aperçu que plus l'intercalaire est épais, plus il diminue la rigidité du vitrage feuilleté.

L'expression bombage thermique désigne le bombage à chaud du verre à sa température de déformation, provoquant sa déformation permanente après son retour à la température ambiante. Il ne s'agit donc pas d'un bombage à froid s'exerçant dans le domaine élastique du verre. Ce bombage thermique est réalisé à une température supérieure à la température de transition vitreuse du verre et généralement à une température supérieure à 550°C.

Ainsi l'invention concerne en premier lieu un vitrage feuilleté bombé pour véhicule comprenant deux feuilles de verre d'épaisseurs différentes séparées par un intercalaire en matériau polymère, caractérisé en ce que

- l'épaisseur E1 du verre épais V1 est telle que $1,4 \text{ mm} \leq E1 \leq 3,9 \text{ mm}$,
- l'épaisseur E2 du verre mince V2 est telle que $1,1 \text{ mm} \leq E2 \leq 2,6 \text{ mm}$,
- l'épaisseur E3 du matériau polymère M est telle que $0,3 \text{ mm} \leq E3 \leq 1,2 \text{ mm}$,
- l'épaisseur EV de verre totale est telle que $2,5 \text{ mm} \leq EV \leq 5,7 \text{ mm}$,
- le rapport des épaisseurs E2/E1 est tel que $0,34 \leq E2/E1 \leq 0,9$.

Le matériau polymère dit M est généralement du type PVB (polybutyral de vinyle). Ce matériau polymère peut-être du type « acoustique », c'est-à-dire ayant la fonction de réduire les sons traversant le vitrage. Pour être qualifié d'acoustique, un tel matériau polymère doit comprendre au moins une couche de matériau polymère (généralement en PVB) ayant un facteur de perte $\tan(\delta)$ supérieur à 0,8 et un module de cisaillement G' inférieur à 20 MPa aux fréquences comprises entre 500 Hz et 5000 Hz à la température de 20°C. Ces propriétés viscoélastiques sont évaluées par l'homme du métier au moyen d'une mesure par cisaillement plan suivant la norme ISO 6721 (Détermination des propriétés mécaniques dynamiques) à l'aide d'un viscoanalyseur de type Metravib 01dB Metravib VA4000.

Cette couche de matériau polymère acoustique peut être la seule couche de l'intercalaire, ou peut être juxtaposée à au moins une autre couche de matériau polymère. Un intercalaire ayant des propriétés acoustiques peut notamment être réalisé par assemblage d'au moins trois couches de PVB, une couche intérieure étant plus molle que deux autres couches qui l'entourent. Généralement, un matériau polymère acoustique fait perdre un peu de rigidité à un vitrage feuilleté, comparé à un matériau polymère classique. Un matériau polymère classique, convient donc mieux à un vitrage feuilleté dont on attend prioritairement une forte rigidité. Un matériau polymère classique présente un module de cisaillement G' supérieur à 100 MPa et un facteur de perte $\tan(\delta)$ inférieur à 0,4 aux fréquences comprises entre 500 Hz et 5000 Hz à la température de 20°C.

Notamment, on dispose d'un vitrage feuilleté présentant un bon compromis rigidité/acoustique avec $0,45 \leq E2/E1 \leq 0,62$.

Plus le vitrage feuilleté contient de verre, meilleure est sa rigidité. C'est pourquoi, avantageusement, l'épaisseur totale EV de verre (EV=E1+E2) dans le vitrage feuilleté est telle que $3\,mm \leq EV \leq 5,7\,mm$, et de préférence telle que $3,5\,mm \leq EV \leq 5,7\,mm$ (notons que « $x \leq y$ » signifie « x inférieur ou égal à y » et que « $x \geq y$ » signifie « x supérieur ou égal à y »).

A épaisseur totale de verre constante (EV constant), quand l'asymétrie augmente, la rigidité augmente également, en conséquence de ce que la rigidité d'un verre augmente avec le cube de son épaisseur, comme déjà expliqué plus haut. C'est pourquoi, si la rigidité est un critère très important, on combine avantageusement :

- $E2/E1 \leq 0,88$ et de préférence $E2/E1 \leq 0,74$ et de préférence $E2/E1 \leq 0,62$, et
- $1,8\,mm \leq E1$ et de préférence $2,1\,mm \leq E1$ ;

le cas échéant en combinaison avec la préférence déjà mentionnée sur l'épaisseur totale de verre favorisant la rigidité, c'est-à-dire $3\,mm \leq EV \leq 5,7\,mm$, et même $3,5\,mm \leq EV \leq 5,7\,mm$, et le cas échéant en combinaison avec l'usage d'un matériau polymère classique, (généralement en PVB) entre V1 et V2. Dans le cadre de cette combinaison, on peut également placer un polymère acoustique (comprenant généralement un PVB acoustique) entre les deux feuilles de verre, si l'on accepte de perdre un peu de rigidité au niveau du vitrage final.

Si une performance acoustique du vitrage feuilleté est particulièrement recherchée, on utilise de préférence comme matériau intercalaire, un matériau polymère acoustique comme décrit plus haut, ce qui, à égales épaisseurs de V1, V2 et M, fait généralement perdre de la rigidité au vitrage feuilleté. Afin de rattraper cette perte de rigidité, on aurait pu penser souhaitable d'augmenter fortement l'asymétrie d'épaisseur des deux verres. Si cette forte asymétrie procure effectivement une augmentation de rigidité, on a cependant dû constater de façon inattendue, que les performances acoustiques étaient dégradées. On a donc finalement déterminé que l'asymétrie entre les deux verres devait être existante mais relativement modérée de sorte à pouvoir obtenir un excellent compromis de propriété entre performance acoustique et rigidité.

Si l'acoustique est un critère très important, on combine donc avantageusement :

- $0,36 \leq E2/E1$ et de préférence $0,39 \leq E2/E1$ et de préférence $0,42 \leq E2/E1$ et de préférence $0,45 \leq E2/E1$, et
- $1,4\,mm \leq E2$ et de préférence $1,6\,mm \leq E2$,

le cas échéant en combinaison avec la préférence déjà mentionnée sur l'épaisseur totale de verre favorisant la rigidité, c'est-à-dire $3\,mm \leq EV \leq 5,7\,mm$, et même $3,5\,mm \leq EV \leq 5,7\,mm$, et de préférence en combinaison avec l'usage d'un intercalaire comprenant un matériau polymère acoustique, généralement un PVB acoustique.

Les deux feuilles de verre peuvent avoir le même contour avant bombage. Les feuilles de verre sont toutes deux bombées à la même forme, c'est-à-dire à la forme du vitrage final avant assemblage en vitrage feuilleté. Des procédés de bombage adaptés pour les deux feuilles de verre sont par exemple du type « bombage au défilé entre deux lits de rouleaux » (comme dans WO2005047198 ou WO2004033381) ou du type « bombage par pressage » (comme dans WO0206170 ou WO2017178733). Les feuilles sont de préférence bombées à l'état individuel et non pas à l'état superposé.

Au moins une feuille de verre peut être en un verre sodocalcique ou aluminosilicate ou borosilicate. Les deux feuilles de verre peuvent être en un verre sodocalcique ou aluminosilicate ou borosilicate. Les deux feuilles de verre peuvent être de type différent, par exemple l'un peut être sodocalcique alors que l'autre est aluminosilicate ou borosilicate.

Au moins une feuille de verre peut être teintée. Les deux feuilles de verre peuvent être teintées. Un verre teinté est un verre comprenant le pigment inorganique souhaité (oxyde de fer, oxyde de cobalt, oxyde de chrome, etc.). Notamment, les deux feuilles de verre peuvent être de composition et de teinte différentes.

Généralement, les feuilles de verre sont renforcées thermiquement, c'est-à-dire semi-trempées ou trempées avant assemblage du vitrage feuilleté. Dans le cadre de la présente demande, une contrainte de surface est mesurée par un appareil fonctionnant sur le principe de la polariscopie comme le polariscope Scalp-04 commercialisé par GlasStress Ltd, Tallin 10912 Estonia. Les valeurs de contrainte données sont des valeurs absolues, puisque l'homme du métier peut aussi les exprimer avec un signe négatif.

Dans le cadre de la présente demande, une contrainte de bord est mesurée par photoélasticimétrie à l'aide de l'appareil Sharples Edge Stress Meter Ref (S-67) de la société Sharples Stress Engineers LTD, Preston United Kingdom.

Un verre trempé thermiquement mène à une contrainte de surface supérieure à 90 MPa, généralement entre 90 et 200 MPa. Un verre durci (ou semi-trempé) thermiquement à une contrainte de surface comprise dans le domaine allant de 15 à 90 MPa, plus généralement comprise dans le domaine allant de 20 à 60 MPa.

Le vitrage selon l'invention peut être un vitrage automobile, notamment de portière sans cadre.

La fabrication d'un verre semi-trempé (également dit «durci thermiquement ») est réalisée sur une installation identique à celle du verre trempé thermiquement. Les conditions de chauffe sont identiques mais la puissance de soufflage d'air de refroidissement est plus faible, ce qui réduit les échanges thermiques convectifs avec les faces principales du verre. En conséquence le temps de cycle est plus élevé puisqu'il faut plus de temps pour que le refroidissement fige les contraintes résiduelles dans le verre.

L'invention concerne également un procédé de fabrication d'un vitrage selon l'invention, comprenant

- le bombage thermique suivi du renforcement thermique par soufflage d'air de deux feuilles de verre ;
- l'assemblage des deux feuilles de verre en un vitrage feuilleté, une feuille de matériau polymère étant placée entre les deux feuilles de verre et adhérant à celles-ci.

Le bombage thermique des feuilles peut être réalisé sur chaque feuille de verre à l'état individuel. De préférence, les deux feuilles de verre sont bombées à des formes identiques, un écart de forme étant possible dès lors qu'il reste dans le domaine de tolérance du procédé de fabrication réglé pour obtenir des formes identiques. Les deux feuilles sont de préférence bombées par un même type de procédé de bombage. En effet, un même type de procédé procure l'avantage de donner des formes les plus semblables possible à différentes feuilles, même si elles sont d'épaisseur différente. Par procédé identique, on entend que les deux feuilles de verre sont toutes deux bombées sur le même principe, c'est-à-dire toutes deux par pressage, ou toutes deux par gravité, ou toutes deux par conformation au défilé entre des lits de rouleaux. Même si les deux feuilles de verre sont bombées par le même type de procédé de bombage, chacune peut être bombée au cours d'une campagne différente de celle au cours de laquelle l'autre feuille est bombée.

Dans les cas où chaque feuille de verre (verre extérieur et verre intérieur) est formée à l'état individuel (c'est-à-dire pas à l'état d'empilement), il est avantageux de les faire circuler dans le four et de les former l'une immédiatement après l'autre. En effet ceci permet d'alimenter le procédé d'assemblage en continu juste après l'étape de formage. Néanmoins, lorsque les deux feuilles de verre sont trop différentes l'une de l'autre, par exemple en terme de couleur et/ou d'épaisseur, il peut être difficile d'assurer une géométrie semblable pour les deux types de feuilles de verre si elles sont formées l'une immédiatement après l'autre au cours d'une même campagne de production. En effet et à titre d'exemple, une feuille de verre mince et fortement teintée se chauffera plus rapidement qu'une feuille de verre claire et épaisse. Si ces deux types de feuilles de verre se succèdent dans une même production, il est très probable que le bombage résulte en deux familles de géométrie significativement différentes (l'une correspondant au verre mince et teinté et l'autre au verre clair et épais).

Aussi, si les deux feuilles de verre sont trop différentes l'une de l'autre, il est préférable de les former par lot. On pourra ainsi bomber un premier lot de feuilles de verre (correspondant par exemple au verre extérieur) puis, au cours d'une seconde campagne, former un second lot de feuilles de verre (correspondant au verre intérieur). L'opération d'assemblage, mêlant des feuilles de deux campagnes de formage distinctes pourra alors être effectuée simultanément à la seconde campagne de formage. On peut donc réaliser le bombage thermique sur les deux feuilles de verre à l'état individuel et par un même type de procédé pour ces deux feuilles, et au cours de deux campagnes de production séparées pour chacune de ces feuilles de verre.

De préférence, au moins une feuille de verre est renforcée thermiquement et de préférence les deux feuilles de verre sont renforcées thermiquement. Le renforcement thermique est réalisé juste après le bombage en refroidissant rapidement le verre par soufflage d'air sur ses deux faces, à partir de la température de bombage.

L'assemblage du vitrage feuilleté à partir des feuilles de verre et de l'intercalaire peut être réalisé selon les méthodes connues de l'homme du métier faisant généralement appel à un autoclavage.

BREVE DESCRIPTION DES FIGURES

- la figure 1 est une vue en perspective qui représente partiellement un véhicule automobile dont une portière est ouverte et qui illustre l'exemple d'une portière dite « frameless » ou sans cadre ;
- la figure 2 est une représentation schématique qui représente la technique utilisée pour mesurer la rigidité d'un verre monolithique ou feuilleté ;

- la figure 3 représente un abaque de l'évolution de la rigidité de vitrages feuilletés relativement à la rigidité d'un vitrage monolithique de 4,2 mm d'épaisseur, et ce en fonction du rapport d'épaisseur des deux feuilles de verre contenu dans ledit vitrage feuilleté ;

- la figure 4 représente l'affaiblissement acoustique aux bruits aériens (ou STL) en fonction de sa fréquence pour différents vitrages comprenant un PVB acoustique de 0,81 mm d'épaisseur ;
- la figure 5 représente l'évolution de la rigidité relative (courbe décroissante) et du minimum d'atténuation acoustique relatif (courbe croissante) en fonction du rapport d'épaisseur des deux feuilles dans un vitrage feuilleté équipé du même PVB acoustique que celui des figures 3 et 4, et dans les mêmes conditions de température (à savoir 20°C), chaque courbe étant à iso-épaisseur de verre totale, soit 4,2mm ;
- la figure 6 représente de manière graphique l'évolution du produit (au sens d'une multiplication) : (rigidité relative - 104%) x (diminution relative du minimum de STL - 94%) en fonction du rapport d'épaisseur des deux feuilles de verre, et ce, à iso-épaisseur de verre totale, soit dans l'exemple 4,2 mm.

## DESCRIPTION DETAILLEE

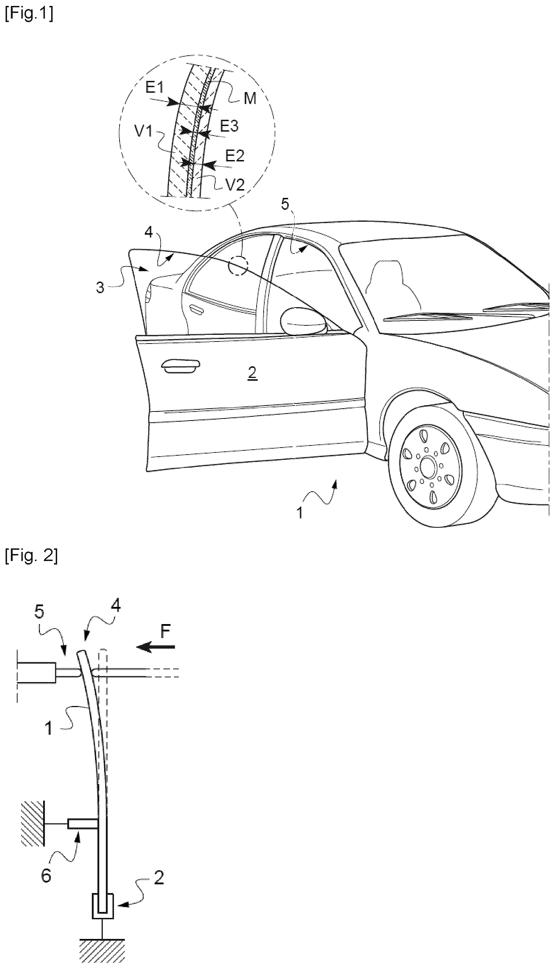

La figure 1 représente un véhicule automobile 1 dont une portière 2 est ouverte. Cette portière comprend une vitre 3 « frameless » ou sans cadre, c'est-à-dire que la portière ne l'encadre pas dans sa partie supérieure. Il est important que cette vitre soit suffisamment rigide pour que son bord supérieur 4 rentre bien dans la rainure 5 de la carrosserie lorsqu'elle est complètement remontée. La structure de la vitre 3 est conforme à l'invention et est montrée dans la loupe. Il s'agit d'un vitrage feuilleté comprenant une feuille de verre V1 d'épaisseur E1 et une feuille de verre V2 d'épaisseur E2, ces deux feuilles étant assemblées de façon adhésive de part et d'autre d'une feuille M de matériau polymère d'épaisseur E3, avec E1>E2. La feuille V1 plus épaisse est à l'extérieur du véhicule et la feuille V2 plus mince est à l'intérieur du véhicule. La face concave du vitrage est à l'intérieur du véhicule.

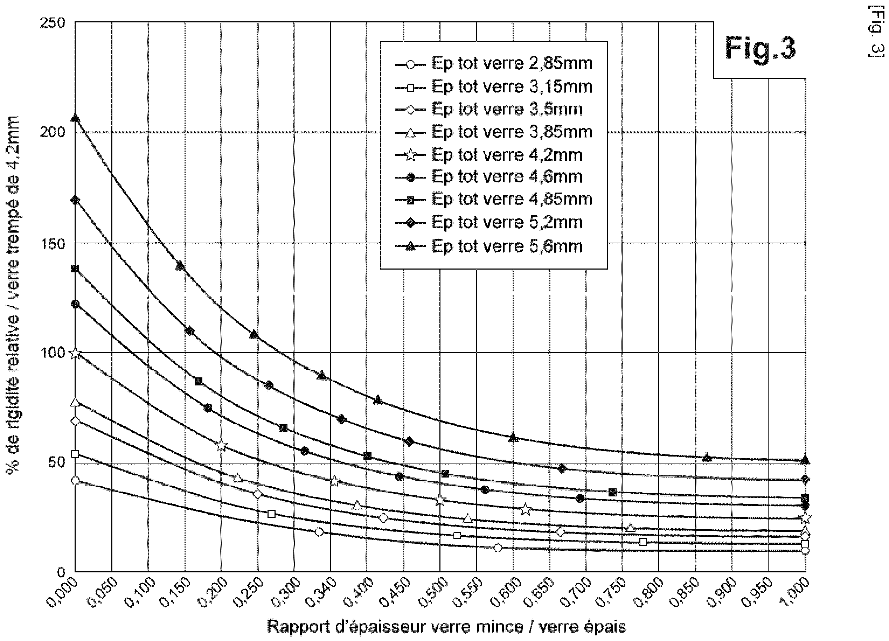

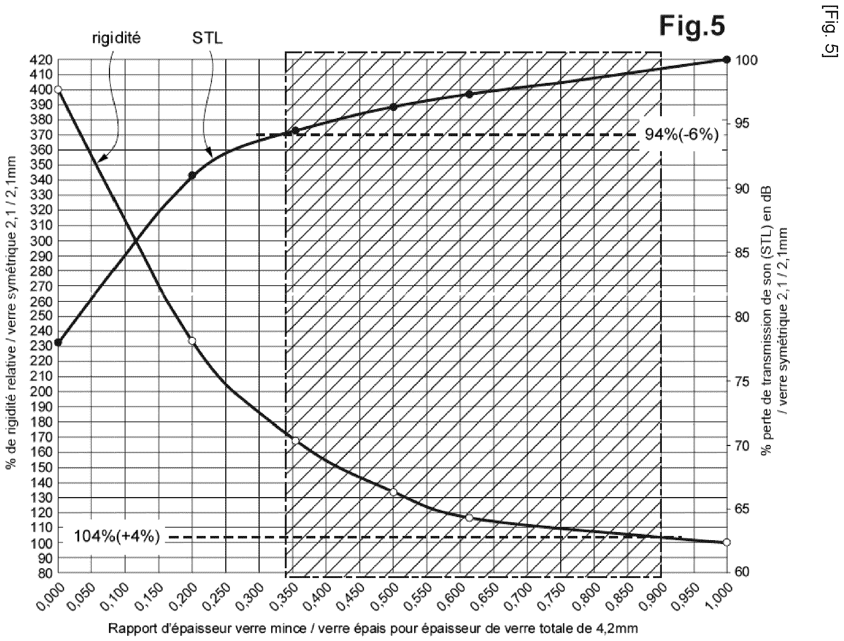

La figure 2 représente la technique utilisée dans le cadre de la présente demande pour mesurer la rigidité d'un verre monolithique ou feuilleté. Un vitrage rectangulaire 1 (feuilleté ou monolithique) de dimension voisine de celle d'un vitrage de portière est maintenu fixement par un bord 2 et l'on exerce une force F connue de flexion sur le bord 4 opposé à celui de fixation. Une barre fixe 6 maintient en position le bas du vitrage. On mesure par un capteur 5 le déplacement occasionné par la force F. On considère que le rapport de la force sur le déplacement est une mesure de rigidité. Compte tenu de ce qu'à épaisseur égale de verre, quand le caractère asymétrique augmente, la rigidité augmente, on prend comme référence un vitrage symétrique, à épaisseur totale de verre constante. Dans les exemples qui suivent, on donne des valeurs relatives de rigidité. Cette façon de mesurer la rigidité peut être simulée à l'aide d'un modèle de calcul numérique par éléments finis, prenant en compte la contribution de l'intercalaire polymère en fonction de la température, et dont les résultats ont été corrélés avec l'expérience. Ce sont ces simulations qui ont été utilisées pour l'établissement des courbes des figures 3 et 5. Notons que pour ces simulations, nous avons considéré un PVB acoustique de 0,81 mm d'épaisseur de marque Sekisui référencé RZN 12 SAF, répondant aux conditions indiquées plus haut pour les PVB acoustiques, à une température de 20°C. Bien entendu, on a vérifié sur un nombre représentatif de points que les simulations reflétaient bien la réalité.

La figure 3 représente un abaque de l'évolution de la rigidité de vitrages feuilletés relativement à la rigidité d'un vitrage monolithique de 4,2 mm d'épaisseur, et ce en fonction du rapport d'épaisseur des deux feuilles de verre contenues dans ledit vitrage feuilleté. Chaque courbe est à iso-épaisseur de verre totale, cette dernière variant de 2,85 à 5,6 mm. Les points sur l'axe des ordonnées (à rapport 0) correspondent donc à un vitrage monolithique et ceux à rapport 1 correspondent à un vitrage feuilleté symétrique (les deux feuilles de verre ayant la même épaisseur). On voit que toutes les courbes montrent la même tendance, à savoir que le verre monolithique a une rigidité très supérieure à tout verre feuilleté contenant autant de verre, et par ailleurs, pour un verre feuilleté, plus le ratio des épaisseurs des feuilles se rapproche de 1 (à quantité de verre constante), plus la rigidité diminue.

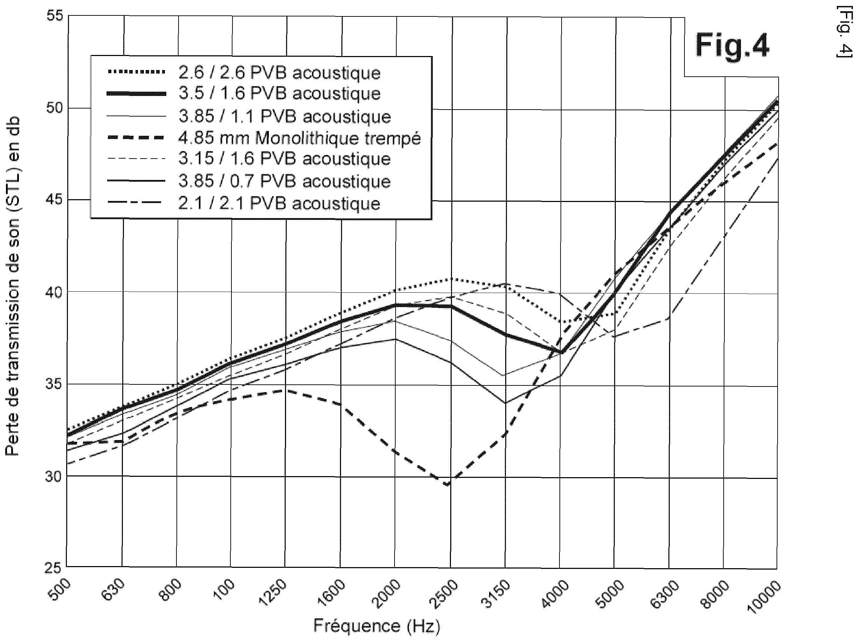

La figure 4 représente l'affaiblissement acoustique aux bruits aériens ou STL (pour « Sound Transmission Loss ») en fonction de sa fréquence pour différents vitrages comprenant un PVB acoustique de 0,81 mm d'épaisseur de marque Sekisui référencé RZN 12 SAF répondant aux conditions indiquées plus haut pour les PVB acoustiques. Les affaiblissements acoustiques aux bruits aériens ont été déterminés à partir de mesurages effectués suivant la norme EN ISO 10140 sur des vitrages de dimension 500mm x 800mm à la température de 20°C (+/- 3°C). A titre de comparaison, on a réalisé les mêmes mesures sur un verre trempé d'épaisseur 4,85 mm. Un domaine de fréquences particulièrement important est le domaine 2000-5000 Hz, et ce à double titre. Tout d'abord, il s'agit de la plage de fréquences dans laquelle l'oreille humaine a le maximum de sensibilité. De plus, la fréquence critique pour l'homme du métier pour ce type de vitrage d'épaisseur totale de verre de 2,5 à 6 mm se situe dans cette plage de fréquences 2000-5000 Hz à cause de la présence d'un minimum d'atténuation acoustique. De ce fait, par simplification de langage, nous appelons cette plage de fréquences, « plage de fréquences critiques ». C'est d'autant plus important, que dans le cas des portières de véhicules automobiles, les oreilles des passagers du véhicule sont situées à proximité directe des vitrages latéraux et donc de leur rayonnement acoustique, lié à des excitations acoustiques dans cette gamme de fréquences, telles que par exemple les turbulences liées aux rétroviseurs. L'analyse des différentes courbes dans ce domaine spectral met en évidence la présence des fréquences de coïncidence pour les différents vitrages ayant un impact défavorable sur l'affaiblissement acoustique aux bruits aériens. La composition présentant le meilleur niveau d'affaiblissement acoustique aux bruits aériens sur la bande 2 kHz - 5 kHz correspondant au vitrage symétrique 2,6/2,6 mm. Le verre trempé renvoie un niveau d'affaiblissement acoustique le plus faible, marqué par une fréquence de coïncidence à 2500 Hz. Dans les conditions de ces essais, l'atténuation sonore dans la plage de fréquences critiques présente un écart de l'ordre de +9 dB en faveur du vitrage feuilleté symétrique par rapport au verre monolithique trempé, à quantité de verre totale voisine (moins de 10% d'écart). En poursuivant cette analyse, pour des vitrages feuilletés asymétriques à quantité de verre totale voisine, on retrouve un écart en faveur du vitrage feuilleté symétrique de +2dB et +3,5dB par rapport à des vitrages présentant un rapport d'épaisseur entre verre intérieur et verre extérieur E2/E1 égal respectivement à 0,46 et 0,29.

La figure 5 représente l'évolution de la rigidité relative (courbe décroissante) et du minimum d'atténuation acoustique relatif (courbe croissante) en fonction du rapport d'épaisseur des deux feuilles dans un vitrage feuilleté équipé du même PVB acoustique que celui mentionné pour les figures 3 et 4, et dans les mêmes conditions de température (à savoir 20°C), chaque courbe étant à iso-épaisseur de verre totale, soit 4,2mm.

Concernant les valeurs de rigidité, la référence prise en compte est le vitrage feuilleté 2,1/2,1mm. Dans la figure, pour chaque point de rapport d'épaisseur, on a tracé le pourcentage de la rigidité intrinsèque de chaque simulation par rapport à la rigidité du vitrage de référence précédemment défini.

Les valeurs acoustiques ont été déterminées en prenant le minimum de STL à la fréquence critique (ou première fréquence de coïncidence dans la bande de 2000 à 5000 Hz définie précédemment comme illustré par la figure 4), pour chaque rapport d'épaisseur et pour la même épaisseur de verre total (4,2 mm). Ensuite, on a déterminé l'évolution relative du minimum de STL dans la zone de fréquences critiques par rapport aux mêmes références que pour la courbe de rigidité (feuilleté symétrique 2,1/2,1 mm). Pour ce faire, à chaque rapport d'épaisseur considéré, chacune de ces valeurs (minimum de STL) a été soustraite à la valeur correspondante du vitrage de référence, le résultat étant ensuite divisé par la valeur du vitrage de référence, le tout étant ensuite ramené en pourcentage en multipliant par 100. On peut considérer que le domaine de rapport d'épaisseurs 0,34 à 0,9 permet l'obtention de vitrages feuilletés ayant un excellent compromis de propriétés acoustique et de rigidité.

Ces courbes de la figure 5 permettent donc de voir qu'il existe un domaine de rapport d'épaisseurs dans lequel la rigidité d'un vitrage est augmentée d'au moins +4% (soit 104% de la référence) de celle d'un vitrage symétrique d'épaisseur totale de verre égale, tout en conservant une perte de son minimum d'au moins 94% de celle du vitrage feuilleté symétrique à épaisseur totale de verre égale. Ces valeurs sont choisies par rapport aux usages connus des vitrages automobiles, et correspondent au seuil de perception par l'usager d'un véhicule. Par exemple, dans le cas de la performance acoustique, un vitrage feuilleté symétrique 2,1/2,1 mm comprenant un PVB Acoustique (défini ci-avant) de 0,81 mm d'épaisseur, présente un minimum de STL dans la zone de fréquences critiques 2-5kHz de l'ordre de 38dB. De ce fait, une évolution de -6% (100-94%) correspond à une diminution du minimum de STL de l'ordre de 3 dB en arrondissant à l'entier supérieur, alors même que l'homme du métier considère le seuil de perception de l'oreille humaine à 3dB.

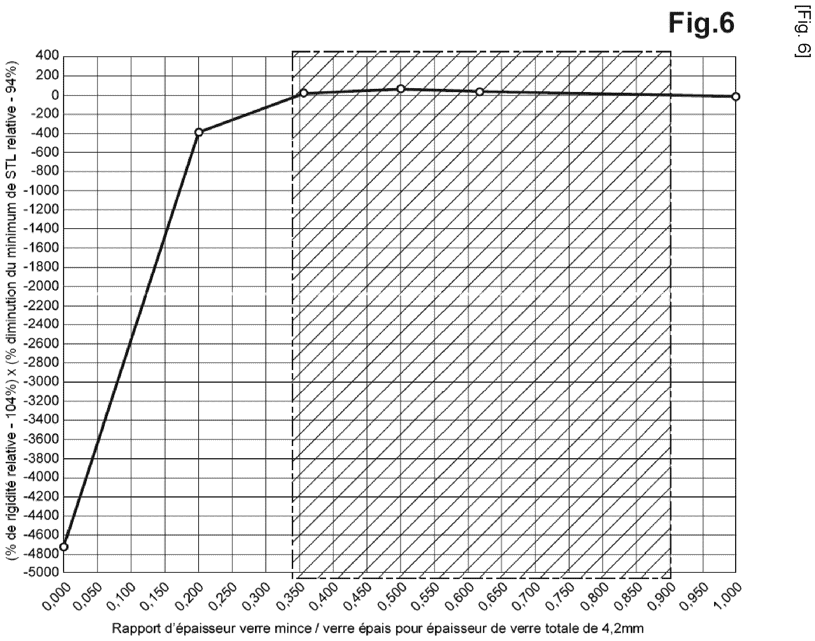

Cela ayant été défini, la figure 6 représente de manière graphique l'évolution du produit (au sens d'une multiplication) : (rigidité relative - 104%) x (diminution relative du minimum de STL - 94%) en fonction du rapport d'épaisseur des deux feuilles de verre, et ce, à iso-épaisseur de verre totale, soit dans notre exemple 4,2 mm. Cherchant des combinaisons de verre permettant à la fois une bonne rigidité et une dégradation minimale du minimum de STL dans la zone de fréquences critiques, à iso-épaisseur de verre totale, nous cherchons de préférence des vitrages feuilletés asymétriques permettant d'avoir le produit défini ci-avant positif. Pour la figure 6 (épaisseur de verre totale = 4,2mm), ce domaine est celui du rapport d'épaisseur entre les verres allant de 0,34 à 0,9. Dans tous les cas, un bon compromis rigidité / acoustique existe pour un rapport d'épaisseurs compris dans le domaine allant de 0,45 à 0,62. On observe l'existence d'un maximum démontrant l'existence d'un compromis optimisant en même temps les performance d'acoustique et de rigidité. Dans cet exemple de la figure 6, le rapport optimum des épaisseurs des deux feuilles de verre est de 0,5.

**Revendications**

1. Vitrage feuilleté bombé (3) pour véhicule (1) comprenant deux feuilles de verre (V1, V2) d'épaisseurs différentes séparées par un intercalaire (M) en matériau polymère, **caractérisé en ce que**

   - l'épaisseur E1 du verre épais V1 est telle que 1,4 mm ≤ E1 ≤ 3,9 mm,
   - l'épaisseur E2 du verre mince V2 est telle que 1,1 mm ≤ E2 ≤ 2,6 mm,
   - l'épaisseur E3 du matériau polymère M est telle que 0,3 mm ≤ E3 ≤ 1,2 mm,
   - l'épaisseur EV de verre totale est telle que 2,5 mm ≤ EV ≤ 5,7 mm,
   - le rapport des épaisseurs E2/E1 est tel que 0,34 ≤ E2/E1 ≤ 0,9.

**2.** Vitrage selon la revendication précédente, **caractérisé en ce que** l'épaisseur EV de verre totale est telle que 3 mm ≤ EV ≤ 5,7 mm, et de préférence telle que 3,5 mm ≤ EV ≤ 5,7 mm.

**3.** Vitrage selon l'une des revendications précédentes, **caractérisé en ce que** le matériau polymère comprend un PVB ayant un facteur de perte $\tan(\delta)$ supérieur à 0,8 et un module de cisaillement G' inférieur à 20 MPa aux fréquences comprises entre 500 Hz et 5000 Hz à la température de 20°C, ces paramètres étant mesurés suivant la norme ISO 6721, dit PVB acoustique.

**4.** Vitrage selon la revendication précédente, **caractérisé en ce que**

- 0,36 ≤ E2/E1 et de préférence 0,39 ≤ E2/E1 et de préférence 0,42 ≤ E2/E1 et de préférence 0,45 ≤ E2/E1, et

$$1,4 \text{ mm} \leq E2.$$

**5.** Vitrage selon la revendication précédente, **caractérisé en ce que** 1,6 mm ≤ E2.

**6.** Vitrage selon l'une des revendications 1 à 3, **caractérisé en ce que**

- E2/E1 ≤ 0,88 et de préférence E2/E1 ≤ 0,74 et de préférence E2/E1 ≤ 0,62, et

$$1,8 \text{ mm} \leq E1.$$

**7.** Vitrage selon la revendication précédente, **caractérisé en ce que** 2,1 mm ≤ E1.

**8.** Vitrage selon l'une des revendications précédentes, **caractérisé en ce que** 0,45 ≤ E2/E1 ≤ 0,62.

**9.** Vitrage selon l'une des revendications précédentes, **caractérisé en ce que** au moins une feuille de verre est renforcée thermiquement et de préférence **en ce que** les deux feuilles de verre sont renforcées thermiquement.

**10.** Vitrage selon l'une des revendications précédentes, **caractérisé en ce que** les deux feuilles de verre sont de composition et de teinte différente.

**11.** Vitrage selon l'une des revendications précédentes **caractérisé en ce qu'**il est un vitrage automobile, notamment de portière sans cadre.

**12.** Véhicule (1) comprenant le vitrage (3) de l'une des revendications précédentes.

**13.** Véhicule selon la revendication précédente, **caractérisé en ce que** le vitrage est monté dans une portière (2) sans cadre.

**14.** Procédé de fabrication d'un vitrage de l'une des revendications de vitrage précédentes, comprenant

- le bombage thermique suivi du renforcement thermique par soufflage d'air de deux feuilles de verre, puis,
- l'assemblage des deux feuilles de verre en un vitrage feuilleté, une feuille de matériau polymère étant placée entre les deux feuilles de verre et adhérant à celles-ci.

**15.** Procédé selon la revendication précédente, **caractérisé en ce que** le bombage thermique confère aux deux feuilles de verre des formes identiques.

**16.** Procédé selon l'une des revendications précédentes de procédé, **caractérisé en ce que** le bombage thermique est réalisé sur chaque feuille à l'état individuel, le même type de procédé de bombage étant utilisé pour le bombage des deux feuilles de verre.

**17.** Procédé selon la revendication précédente, **caractérisé en ce que** le bombage thermique est réalisé au cours de deux campagnes de production séparées pour chacune de ces feuilles de verre.

**Patentansprüche**

1. Gebogene Verbundverglasung (3) für Fahrzeug (1), umfassend zwei Glasscheiben (V1, V2) unterschiedlicher Dicken, die durch eine Zwischenschicht (M) aus Polymermaterial getrennt sind, **dadurch gekennzeichnet, dass**

   - die Dicke E1 des dicken Glases V1 derart ist, dass $1,4\ mm \leq E1 \leq 3,9\ mm$,
   - die Dicke E2 des dünnen Glases V2 derart ist, dass $1,1\ mm \leq E2 \leq 2,6\ mm$,
   - die Dicke E3 des Polymermaterials M derart ist, dass $0,3\ mm \leq E3 \leq 1,2\ mm$,
   - die Gesamtglasdicke EV derart ist, dass $2,5\ mm \leq EV \leq 5,7\ mm$,
   - das Verhältnis der Dicken E2/E1 derart ist, dass $0,34 \leq E2/E1 \leq 0,9$.

2. Verglasung nach dem vorstehenden Anspruch,
   **dadurch gekennzeichnet, dass** die Gesamtglasdicke EV derart ist, dass $3\ mm \leq EV \leq 5,7\ mm$, und vorzugsweise derart, dass $3,5\ mm \leq EV \leq 5,7\ mm$.

3. Verglasung nach einem der vorstehenden Ansprüche,
   **dadurch gekennzeichnet, dass** das Polymermaterial ein PVB umfasst, das einen Verlustfaktor $\tan(\delta)$ von mehr als 0,8 und ein Schermodul G' von weniger als 20 MPa bei Frequenzen zwischen 500 Hz und 5000 Hz bei einer Temperatur von 20 °C aufweist, wobei diese Parameter nach der Norm ISO 6721 gemessen werden, so genanntes akustisches PVB.

4. Verglasung nach dem vorstehenden Anspruch,
   **dadurch gekennzeichnet, dass**

   - $0,36 \leq E2/E1$ und vorzugsweise $0,39 \leq E2/E1$ und vorzugsweise $0,42 \leq E2/E1$ und vorzugsweise $0,45 \leq E2/E1$, und
   - $1,4\ mm \leq E2$.

5. Verglasung nach dem vorstehenden Anspruch,
   **dadurch gekennzeichnet, dass** $1,6\ mm \leq E2$.

6. Verglasung nach einem der Ansprüche 1 bis 3,
   **dadurch gekennzeichnet, dass**

   - $E2/E1 \leq 0,88$ und vorzugsweise $E2/E1 \leq 0,74$ und vorzugsweise $E2/E1 \leq 0,62$, und
   - $1,8\ mm \leq E1$.

7. Verglasung nach dem vorstehenden Anspruch,
   **dadurch gekennzeichnet, dass** $2,1\ mm \leq E1$.

8. Verglasung nach einem der vorstehenden Ansprüche,
   **dadurch gekennzeichnet, dass** $0,45 \leq E2/E1 \leq 0,62$.

9. Verglasung nach einem der vorstehenden Ansprüche,
   **dadurch gekennzeichnet, dass** mindestens eine Glasscheibe thermisch verstärkt ist, und vorzugsweise **dadurch, dass** die beiden Glasscheiben thermisch verstärkt sind.

10. Verglasung nach einem der vorstehenden Ansprüche,
    **dadurch gekennzeichnet, dass** die beiden Glasscheiben eine unterschiedliche Zusammensetzung und eine unterschiedliche Tönung aufweisen.

11. Verglasung nach einem der vorstehenden Ansprüche,
    **dadurch gekennzeichnet, dass** es sich um eine Kraftfahrzeugverglasung, insbesondere einer rahmenlosen Tür, handelt.

12. Fahrzeug (1), umfassend die Verglasung (3) nach einem der vorstehenden Ansprüche.

13. Fahrzeug nach dem vorstehenden Anspruch,

**dadurch gekennzeichnet, dass** die Verglasung in einer rahmenlosen Tür (2) montiert ist.

14. Verfahren zur Herstellung einer Verglasung nach einem der vorstehenden Verglasungsansprüche, umfassend

- das thermische Biegen, gefolgt von der thermischen Verstärkung durch Luftblasen der zwei Glasscheiben, dann,
- das Zusammenfügen der beiden Glasscheiben zu einer Verbundverglasung, wobei eine Scheibe aus Polymermaterial zwischen den beiden Glasscheiben angeordnet und mit diesen verklebt wird.

15. Verfahren nach dem vorstehenden Anspruch,
**dadurch gekennzeichnet, dass** das thermische Biegen den beiden Glasscheiben identische Formen verleiht.

16. Verfahren nach einem der vorstehenden Ansprüche,
**dadurch gekennzeichnet, dass** das thermische Biegen an jeder Scheibe im einzelnen Zustand durchgeführt wird, wobei derselbe Typ von Biegeverfahren für das Biegen der beiden Glasscheiben verwendet wird.

17. Verfahren nach dem vorstehenden Anspruch,
**dadurch gekennzeichnet, dass** das thermische Biegen im Verlauf von zwei getrennten Produktionskampagnen für jede dieser Glasscheiben durchgeführt wird.

**Claims**

1. A formed laminated glazing (3) for a vehicle (1), comprising two sheets of glass (V1, V2) of different thicknesses separated by an interlayer (M) made of polymer material, **characterized in that**

   - the thickness E1 of the thick glass V1 is such that $1.4 \text{ mm} \leq E1 \leq 3.9 \text{ mm}$,
   - the thickness E2 of the thin glass V2 is such that $1.1 \text{ mm} \leq E2 \leq 2.6 \text{ mm}$,
   - the thickness E3 of the polymer material M is such that $0.3 \text{ mm} \leq E3 \leq 1.2 \text{ mm}$,
   - the total glass thickness EV is such that $2.5 \text{ mm} \leq EV \leq 5.7 \text{ mm}$,
   - the ratio of the thicknesses E2/E1 is such that $0.34 \leq E2/E1 \leq 0.9$.

2. The glazing according to the preceding claim, **characterized in that** the total glass thickness EV is such that $3 \text{ mm} \leq EV \leq 5.7 \text{ mm}$, and preferably such that $3.5 \text{ mm} \leq EV \leq 5.7 \text{ mm}$.

3. The glazing according to one of the preceding claims, **characterized in that** the polymer material comprises a PVB having a $\tan(\delta)$ loss factor of greater than 0.8 and a shear modulus G' of less than 20 MPa at frequencies of between 500 Hz and 5000 Hz at the temperature of 20°C, these parameters being measured in accordance with ISO 6721, referred to as acoustic PVB.

4. The glazing according to the preceding claim, **characterized in that**

   - $0.36 \leq E2/E1$ and preferably $0.39 \leq E2/E1$ and preferably $0.42 \leq E2/E1$ and preferably $0.45 \leq E2/E1$, and

$$1.4 \text{ mm} \leq E2.$$

5. The glazing according to the preceding claim, **characterized in that** $1.6 \text{ mm} \leq E2$.

6. The glazing according to one of claims 1 to 3, **characterized in that**

   - $E21E1 \leq 0.88$ and preferably $E21E1 \leq 0.74$ and preferably $E21E1 \leq 0.62$, and

$$1.8 \text{ mm} \leq E1.$$

7. The glazing according to the preceding claim, **characterized in that** $2.1 \text{ mm} \leq E1$.

8. The glazing according to one of the preceding claims, **characterized in that** $0.45 \leq E2/E1 \leq 0.62$.

9. The glazing according to one of the preceding claims, **characterized in that** at least one sheet of glass is thermally reinforced and preferably **in that** the two sheets of glass are thermally reinforced.

10. The glazing according to one of the preceding claims, **characterized in that** the two sheets of glass are of different composition and hue.

11. The glazing according to one of the preceding claims, **characterized in that** it is a motor vehicle glazing, particularly for a frameless door.

12. A vehicle (1) comprising the glazing (3) of one of the preceding claims.

13. The vehicle according to the preceding claim, **characterized in that** the glazing is mounted in a frameless door (2).

14. A method for manufacturing a glazing of one of the preceding glazing claims, comprising

   - hot forming followed by thermal reinforcement by blowing air for the two sheets of glass, then,
   - assembling the two sheets of glass into a laminated glazing, one sheet of polymer material being placed between the two sheets of glass and adhering to them.

15. The method according to the preceding claim, **characterized in that** the hot forming gives the two sheets of glass identical shapes.

16. The method according to one of the preceding process claims, **characterized in that** the hot forming is carried out on each sheet in the individual state, the same type of forming process being used for forming the two sheets of glass.

17. The method according to the preceding claim, **characterized in that** the hot forming is carried out over two separate production runs for each of these sheets of glass.

[Fig.1]

[Fig. 2]

[Fig. 3]

Fig.3

Légende:
- Ep tot verre 2,85mm
- Ep tot verre 3,15mm
- Ep tot verre 3,5mm
- Ep tot verre 3,85mm
- Ep tot verre 4,2mm
- Ep tot verre 4,6mm
- Ep tot verre 4,85mm
- Ep tot verre 5,2mm
- Ep tot verre 5,6mm

% de rigidité relative / verre trempé de 4,2mm

Rapport d'épaisseur verre mince / verre épais

**Fig.4**

Légende:
- 2.6 / 2.6 PVB acoustique
- 3.5 / 1.6 PVB acoustique
- 3.85 / 1.1 PVB acoustique
- 4.85 mm Monolithique trempé
- 3.15 / 1.6 PVB acoustique
- 3.85 / 0.7 PVB acoustique
- 2.1 / 2.1 PVB acoustique

Axe Y: Perte de transmission de son (STL) en db

Axe X: Fréquence (Hz)

EP 4 117 910 B1

[Fig. 4]

EP 4 117 910 B1

[Fig. 5]

Fig.5

15

[Fig. 6]

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020020937 A1
- WO 2005047198 A
- WO 2004033381 A
- WO 0206170 A
- WO 2017178733 A